(19) **Europäisches Patentamt European Patent Office Office européen des brevets**

(11) **EP 1 885 654 B1**

(12) **FASCICULE DE BREVET EUROPEEN**

(45) Date de publication et mention de la délivrance du brevet:
**21.06.2017 Bulletin 2017/25**

(21) Numéro de dépôt: **06755526.8**

(22) Date de dépôt: **29.05.2006**

(51) Int Cl.:
*C01B 33/193* [(2006.01)]   *C08K 3/36* [(2006.01)]

(86) Numéro de dépôt international:
**PCT/FR2006/001207**

(87) Numéro de publication internationale:
**WO 2006/125927 (30.11.2006 Gazette 2006/48)**

(54) **PROCEDE DE PREPARATION DE SILICE PRECIPITEE, SILICE PRECIPITEE OBTENUE ET UTILISATIONS, NOTAMMENT COMME CHARGE DANS LES MATRICES SILICONES**

VERFAHREN ZUR HERSTELLUNG VON FÄLLUNGSKIESELSÄURE, SO ERHALTENE FÄLLUNGSKIESELSÄURE UND VERWENDUNG DAVON, BEISPIELSWEISE ALS FÜLLSTOFF IN SILIKON-MATRIZEN

METHOD OF PREPARING PRECIPITATED SILICA, PRECIPITATED SILICA THUS OBTAINED AND USE THEREOF, FOR EXAMPLE AS A FILLER IN SILICON MATRICES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.05.2005 FR 0505414**

(43) Date de publication de la demande:
**13.02.2008 Bulletin 2008/07**

(73) Titulaire: **RHODIA CHIMIE 75009 Paris (FR)**

(72) Inventeurs:
• **VALERO, Rémi**
  **01390 Saint Jean de Thurigneux (FR)**
• **JAS, Jean-Noël**
  **F-69270 Fontaines sur Saone (FR)**
• **RACINOUX, Joël**
  **F-69270 Rochetaillée sur Saone (FR)**
• **HWANG, Kyu-Min**
  **Kuro-Gu,**
  **Seoul (KR)**
• **YOO, Youn-Kwon**
  **402-736 Inchon (KR)**
• **DAUDEY, Soline**
  **F-69004 Lyon (FR)**

(74) Mandataire: **Ferri, Isabella et al**
  **Solvay S.A.**
  **Viale Lombardia, 20**
  **20021 Bollate (MI) (IT)**

(56) Documents cités:
**EP-A- 0 407 262    WO-A-99/52979**
**WO-A-02/051750    WO-A-03/055801**
**GB-A- 745 822    GB-A- 1 409 476**
**GB-A- 2 222 823    US-A- 5 616 316**

**Description**

La présente invention est relative à l'utilisation d'acide carboxylique lors de la préparation de silice précipitée ou de suspension de silice précipitée, à un procédé de préparation d'une silice précipitée ou d'une suspension de silice précipitée, aux silices précipitées et aux suspensions de silice précipitée ainsi obtenues.

Elle est aussi relative à une silice précipitée particulière à faible reprise en eau et à son procédé de préparation.

Elle concerne également les utilisations de ces silices précipitées, en particulier celles ayant une faible reprise en eau, notamment à titre de charge dans les matrices à base de silicone(s), par exemple destinées à l'enrobage des câbles électriques.

L'obtention de silices précipitées pouvant être utilisées comme charge renforçante dans les matrices silicones, en particulier de silices précipitées à faible reprise en eau, est recherchée.

Ainsi, si dans les matrices à base de silicone(s), par exemple les compositions de type élastomères silicones ou de pâtes de silicones, on emploie depuis de nombreuses années, à titre de charge renforçante, des silices pyrogénées, qui présentent une faible affinité avec l'eau, celles-ci sont notamment, de par leur mode d'obtention, onéreuses.

Aussi, dans les applications de renforcement de matrices silicones, on a cherché depuis quelques années à remplacer au moins partiellement ces silices pyrogénées de prix élevé par des silices précipitées, de moindre coût. WO 03/055801, par exemple, décrit des silices de précipitation possédant de faibles reprises en eau, notamment inférieure à 6%, ainsi que leur utilisation pour le renforcement de matrices élastomères silicones ou à base de pâtes de silicones. WO 03/055801 décrit aussi un procédé de précipitation de la silice où la reaction de précipitation a lieu en milieu dilué et avec le pH du milieu réactionnel à une valeur de l'ordre de 7,5 lors de la formation de la silice.

Mais, il s'avère que les silices précipitées ne présentent pas souvent de bonnes propriétés de renforcement des matrices silicones. Leur compatibilité avec les matrices silicones dans lesquelles elles sont incorporées n'est pas toujours satisfaisante. En outre, elles ont par exemple plutôt tendance à présenter une forte affinité avec l'eau, ce qui constitue un inconvénient dans le cadre d'une utilisation pour le renforcement de matrices silicones. De manière générale, l'affinité d'une silice vis-à-vis de l'eau est illustrée par sa caractéristique de reprise en eau, qui reflète la tendance plus ou moins marquée que présentent les molécules d'eau à s'adsorber sur sa surface. Les silices précipitées présentent souvent une forte affinité pour l'eau en raison notamment de la présence sur leur surface de groupements Si-OH avides d'eau.

L'un des buts de l'invention est notamment de fournir une alternative aux procédés de préparation connus de silices précipitées, qui soit économique et simple de mise en oeuvre, et qui, de préférence, permette l'obtention de silices précipitées utilisables à titre de charges, notamment renforçantes, dans des matrices à base de silicone(s) et à qui elles peuvent conférer, de préférence, de bonnes propriétés optiques et/ou mécaniques.

La présente invention a notamment pour objet l'utilisation d'acide carboxylique, de préférence soluble dans l'eau, au cours de la préparation de silice précipitée ou de suspension (en particulier aqueuse) de silice précipitée, dans laquelle l'acide carboxylique est mélangé ou ajouté au gâteau de filtration issu de la réaction de précipitation de la silice, avant ou au cours de l'opération de délitage à laquelle est soumis le gâteau de filtration, le mélange obtenu étant ensuite éventuellement séché.

De manière générale, la préparation de silice précipitée s'effectue par réaction de précipitation d'un silicate, tel qu'un silicate de métal alcalin (silicate de sodium par exemple), avec un agent acidifiant (acide sulfurique par exemple), puis séparation par filtration, avec obtention d'un gâteau de filtration, de la silice précipitée obtenue, ensuite délitage dudit gâteau de filtration et enfin séchage (généralement par atomisation). Le mode de précipitation de la silice peut être quelconque : notamment, addition d'agent acidifiant sur un pied de cuve de silicate, addition simultanée totale ou partielle d'agent acidifiant et de silicate sur un pied de cuve d'eau ou de silicate.

L'utilisation visée par l'invention n'est pas celle d'un acide carboxylique comme agent acidifiant au niveau de la réaction de précipitation, ni celle d'un acide carboxylique lors d'une simple étape éventuelle de lavage du gâteau de filtration. L'utilisation d'acide carboxylique, en particulier en solution aqueuse, au cours de la préparation de silice précipitée pour le lavage du gâteau de filtration est décrit par US5616316 et EP407262.

Selon l'invention, le gâteau de filtration est soumis à une opération de délitage et l'acide carboxylique est mélangé ou ajouté audit gâteau avant cette opération de délitage ou, de manière préférée, au cours de cette opération de délitage. Dans le cas de la préparation de silice précipitée, le mélange alors obtenu (suspension de silice précipitée) est ensuite séché (généralement par atomisation).

L'opération de délitage est une opération de fluidification ou liquéfaction, dans laquelle le gâteau de filtration est rendu liquide, ici en présence d'acide carboxylique, la silice précipitée se retrouvant en suspension. Cette opération peut être ainsi réalisée en soumettant le gâteau de filtration à une action chimique par addition d'acide carboxylique, éventuellement couplée à une action mécanique (par exemple par passage dans un broyeur de type colloïdal). La suspension (en particulier aqueuse) obtenue après délitage présente une viscosité relativement faible.

Un acide minéral ou un composé à base d'aluminium (type aluminate d'aluminium) peuvent éventuellement être utilisés, en plus de l'acide carboxylique, lors de l'opération de délitage. Cependant, de manière avantageuse, aucun acide minéral et aucun composé à base d'aluminium (type aluminate de sodium) ne sont employés lors de l'opération de délitage.

De manière particulière, l'invention concerne l'utilisation d'acide carboxylique comme agent de fluidification du gâteau de filtration.

L'utilisation d'acide carboxylique peut permettre d'améliorer les propriétés de la silice précipitée en tant que charge, notamment renforçante, dans les matrices solides, telles que les matrices à base de silicone(s), les matrices à base de polyamide(s).

L'acide carboxylique est, de préférence, choisi parmi l'acide maléique, l'acide formique, l'acide octanoïque, l'acide acétique, l'acide oxalique, l'acide propionique, l'acide succinique.

Il peut être en particulier choisi parmi l'acide maléique, l'acide formique, l'acide octanoïque, l'acide propionique, l'acide succinique.

La présente invention concerne également un procédé de préparation d'une silice précipitée ou d'une suspension de silice précipitée dans lequel :

- on fait réagir au moins un silicate avec au moins un agent acidifiant, de manière à obtenir une suspension de silice précipitée,
- on filtre la suspension de silice précipitée obtenue,
- on soumet le gâteau de filtration, obtenu à l'issue de la filtration, à une opération de délitage,

caractérisé en ce qu'on mélange ou ajoute au gâteau de filtration avant ou au cours de l'opération de délitage au moins un acide carboxylique, de préférence soluble dans l'eau, le mélange obtenu étant ensuite, dans le cas de la préparation d'une silice précipitée, séché (généralement par atomisation).

De même, le gâteau de filtration est soumis à une opération de délitage et l'acide carboxylique est mélangé ou ajouté audit gâteau avant cette opération de délitage ou, de manière préférée, au cours de cette opération de délitage. Dans le cas de la préparation de silice précipitée, le mélange alors obtenu (suspension de silice précipitée) est ensuite séché (généralement par atomisation).

L'opération de délitage est une opération de fluidification ou liquéfaction, dans laquelle le gâteau de filtration est rendu liquide, ici en présence d'acide carboxylique, la silice précipitée se retrouvant en suspension. Cette opération peut être ainsi réalisée en soumettant le gâteau de filtration à une action chimique par addition d'acide carboxylique, éventuellement couplée à une action mécanique (par exemple par passage dans un broyeur de type colloïdal). La suspension (en particulier aqueuse) obtenue après délitage présente une viscosité relativement faible.

De manière avantageuse, aucun autre acide (notamment minéral) et aucun composé à base d'aluminium (type aluminate de sodium) ne sont ici employés lors de l'opération de délitage.

De même, l'acide carboxylique est, de préférence, choisi parmi l'acide maléique, l'acide formique, l'acide octanoïque, l'acide acétique, l'acide oxalique, l'acide propionique, l'acide succinique.

Il peut être en particulier choisi parmi l'acide maléique, l'acide formique, l'acide octanoïque, l'acide propionique, l'acide succinique.

Dans l'invention, le gâteau de filtration peut éventuellement être lavé.

L'invention concerne aussi les suspensions de silice précipitée issues de l'utilisation précédemment décrite et les suspensions de silice précipitée obtenues ou susceptibles d'être obtenues par le procédé selon l'invention.

L'invention est également relative aux silices précipitées issues de l'utilisation précédemment exposée et aux silices précipitées obtenues ou susceptibles d'être obtenues par le procédé selon l'invention, ces silices pouvant avoir été éventuellement broyées.

La quantité d'acide carboxylique employée est en général telle que ces silices précipitées présentent habituellement une teneur en acide carboxylique + carboxylate correspondant (c'est-à-dire carboxylate issu dudit acide carboxylique), exprimée en carbone (organique), d'au moins 0,02 %, de préférence d'au moins 0,03 %, en particulier d'au moins 0,04 %, notamment d'au moins 0,05 % en poids, par exemple d'au moins 0,10 %, en poids.

Cette teneur peut être d'au moins 0,20 %, en particulier d'au moins 0,30 %, notamment d'au moins 0,40 %, voire d'au moins 0,50 %, en poids.

La teneur en acide carboxylique + carboxylate correspondant, exprimée en carbone, peut être mesurée à l'aide d'un analyseur LECO CS 444. Le principe de la méthode de mesure est généralement le suivant :

- oxydation de la silice en présence de catalyseur dans un four à induction sous balayage d'oxygène ;
- détection et intégration des pics de $CO_2$ par spectrométrie Infra Rouge. Préalablement, on réalise en général sur la silice un pastillage (pression de 10 tonnes/cm$^2$) et un traitement thermique de 5 minutes à 160 °C.

Ces silices précipitées selon l'invention présentent en général à leur surface des molécules de l'acide carboxylique employé et/ou du carboxylate correspondant à l'acide carboxylique employé.

Cette présence d'acide carboxylique sous la forme acide et/ou sous la forme carboxylate peut être déterminée par Infra Rouge (notamment par analyse ATR-diamant sur la silice à l'aide, par exemple, d'un spectromètre BRUKER IFS 66).

La présente invention a pour objet en particulier une silice précipitée (dénommée S dans la suite de l'exposé) caractérisée en ce qu'elle possède :

- une reprise en eau inférieure à 6 %, et de préférence supérieure à 3 %, en particulier comprise entre 4,5 et 5,8 %,
- un taux d'anion résiduel, exprimé en sulfate de métal alcalin (en particulier de sodium), inférieur à 1 %, de manière avantageuse inférieur à 0,5 %, de préférence inférieur à 0,25 %, en particulier d'au plus 0,20 %, en poids,
- une teneur en acide carboxylique + carboxylate correspondant, exprimée en carbone (organique), d'au moins 0,02 %, de préférence d'au moins 0,03 %, en particulier d'au moins 0,04 %, plus particulièrement d'au moins 0,05 %, notamment d'au moins 0,10 %, par exemple d'au moins 0,30 %, voire d'au moins 0,40 % ou d'au moins 0,50 %, en poids.

Le principe de la méthode de mesure de la reprise en eau consiste généralement à placer, dans des conditions d'humidité relative données et pendant une durée prédéfinie, l'échantillon de silice préalablement séché ; la silice s'hydrate alors, ce qui fait passer la masse de l'échantillon d'une valeur initiale m (à l'état séché) à une valeur finale m + dm. On désigne spécifiquement par "reprise en eau" d'une silice, en particulier dans toute la suite de l'exposé, le rapport dm/m (c'est-à-dire la masse d'eau intégrée à l'échantillon rapportée à la masse de l'échantillon à l'état sec) exprimé en pourcentage calculé pour un échantillon de silice soumis aux conditions suivantes lors de la méthode de mesure :

- séchage préliminaire : 8 heures, à 105 °C ;
- hydratation : 24 heures, à 20 °C, et sous une humidité relative de 70 %.

Le protocole expérimental mis en oeuvre consiste à successivement :

- peser exactement environ 2 g de la silice à tester ;
- sécher pendant 8 heures la silice ainsi pesée dans une étuve réglée à une température de 105 °C ;
- déterminer la masse m de la silice obtenue à l'issue de ce séchage ;
- disposer pendant 24 heures, à 20 °C, la silice séchée dans un récipient fermé tel qu'un dessicateur contenant un mélange eau / glycérine, de façon à ce que l'humidité relative du milieu fermé soit de 70 % ;
- déterminer la masse (m + dm) de la silice obtenue suite à ce traitement de 24 heures à 70 % d'humidité relative, la mesure de cette masse étant effectuée immédiatement après avoir sorti la silice du dessicateur, de manière à éviter une variation de la masse de la silice sous l'influence du changement d'hygrométrie entre le milieu à 70 % d'humidité relative et l'atmosphère du laboratoire.

La teneur en carbone peut être déterminée selon la méthode exposée plus haut.

De préférence, la silice précipitée S selon l'invention présente en général à sa surface des molécules d'acide carboxylique et/ou des molécules du carboxylate correspondant à un acide carboxylique. De manière préférée, ledit acide carboxylique est l'acide maléique, l'acide formique, l'acide octanoïque, l'acide acétique, l'acide oxalique, l'acide propionique ou l'acide succinique. De manière encore plus préférée, ledit acide carboxylique est l'acide maléique, l'acide formique, l'acide octanoïque, l'acide propionique ou l'acide succinique.

Cette présence d'acide carboxylique sous la forme acide et/ou sous la forme carboxylate peut être déterminée par Infra Rouge (notamment comme décrit plus haut).

La silice précipitée S selon l'invention présente, en général, une surface spécifique CTAB comprise entre 50 et 260 m$^2$/g, de préférence entre 110 et 240 m$^2$/g, de manière encore plus préférée entre 130 et 220 m$^2$/g, en particulier entre 145 et 210 m$^2$/g, notamment entre 150 et 200 m$^2$/g ; cette surface spécifique CTAB peut être comprise entre 155 et 195 m$^2$/g, par exemple entre 160 et 195 m$^2$/g ou entre 170 et 190 m$^2$/g.

La surface spécifique CTAB est la surface externe déterminée selon la norme NFT 45-007 (novembre 1987).

La silice précipitée S selon l'invention possède, de préférence, une prise d'huile DOP supérieure à 300 ml/100g, de manière encore plus préférée supérieure à 310 ml/100g, en particulier comprise entre 315 et 450 ml/100g, notamment entre 315 et 400 ml/100g, par exemple entre 320 et 380 ml/100g, voire entre 340 et 380 ml/100g.

La prise d'huile DOP est déterminée selon la norme ISO 787/5 en mettant en oeuvre du dioctylphtalate.

La silice précipitée S possède, selon une variante préférée de l'invention, une taille moyenne ou un diamètre médian de particules inférieur à 30 $\mu$m, de manière encore plus préférée inférieur à 20 $\mu$m, en particulier compris entre 5 et 15 $\mu$m, notamment entre 8 et 13 $\mu$m.

Selon une autre variante de l'invention, la silice précipitée S possède une taille moyenne ou un diamètre médian de particules compris entre 30 $\mu$m et 20 mm.

La taille moyenne des particules de silice peut être déterminée selon la norme NF X 11507 (décembre 1970) par tamisage à sec et détermination du diamètre correspondant à un refus cumulé à 50 %.

Le diamètre médian des particules de silice peut être déterminé par diffraction laser selon la norme NF X 11-666. Le granulomètre utilisé est du type MALVERN MASTERSIZER. Les critères de mesure sont les suivants :

* concentration optique : 12 ± 2 %
* liquide de mesure : eau déminéralisée dégazée
* absence d'ultrason
* absence de dispersant
* durée de la mesure : 10 secondes

La silice précipitée S selon l'invention présente, de préférence, un pH compris entre 3,5 et 7,5, de manière encore plus préférée entre 4 et 7, en particulier entre 4,5 et 6.

Le pH de la silice est mesuré selon la norme ISO 787/9 (pH d'une suspension à 5 % en poids de silice dans l'eau désionisée).

La silice précipitée S selon l'invention présente en général un diamètre médian d50 des particules, après désagglomération aux ultra-sons, d'au plus 35 $\mu$m, de préférence d'au plus 30 $\mu$m, tout particulièrement d'au plus 25 $\mu$m, notamment d'au plus 15 $\mu$m, par exemple d'au plus 10 $\mu$m.

Le diamètre médian d50 de la silice après désagglomération par ultra-sons est mesuré au granulomètre MALVERN MASTERSIZER, selon le test suivant :

La puissance des ultra-sons dans le granulomètre MALVERN MASTERSIZER étant réglée sur la graduation maximale de 20, on introduit une quantité de silice de façon à obtenir une concentration optique de 12 ± 2 %.

On mesure le diamètre médian d50 et le pourcentage de particules de silice de diamètre supérieur à 51 $\mu$m après avoir maintenu les ultra-sons dans la cuve pendant 60 secondes, la cuve étant homogénéisée par circulation de la suspension au moyen d'une pompe centrifuge. La mesure est enregistrée 10 secondes après l'arrêt des ultra-sons.

L'aptitude de la silice selon l'invention à se disperser ou à se désagglomérer peut également être appréciée par une mesure granulométrique (par diffraction laser), effectuée sur une suspension de silice préalablement désagglomérée par ultra-sonification (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomère SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 %. La désagglomération est effectuée pendant 420 secondes. On réalise ensuite la mesure granulométrique en introduisant dans la cuve du granulomère un volume V (exprimé en ml) de la suspension homogénéisée nécessaire pour obtenir une densité optique de l'ordre de 20.

Un facteur de désagglomération $F_D$ est alors donné par l'équation :

$$F_D = 10 \times V/\text{densité optique de la suspension mesurée par le granulomètre (cette densité optique est d'environ 20).}$$

Ce facteur de désagglomération $F_D$ est indicatif du taux de particules de taille inférieure à 0,1 $\mu$m qui ne sont pas détectées par le granulomètre. Ce facteur est d'autant plus élevé que la silice présente une aptitude à la désagglomération élevée.

La valeur du diamètre médian $\emptyset_{50}$ que l'on obtient selon ce test est d'autant plus faible que la silice présente une aptitude à la désagglomération élevée.

Généralement, la silice précipitée S selon l'invention possède un diamètre médian $\emptyset_{50}$, après désagglomération aux ultra-sons, inférieur à 6 $\mu$m, en particulier inférieur à 5 $\mu$m, par exemple inférieur à 3,5 $\mu$m.

La silice précipitée S selon l'invention présente, en général, un facteur de désagglomération aux ultra-sons $F_D$ supérieur à 5,5 ml, en particulier supérieur à 7,5 ml, par exemple supérieur à 11,5 ml.

La silice précipitée S selon l'invention possède habituellement une surface spécifique BET telle que la différence surface BET - surface CTAB soit d'au plus 60 $m^2$/g, de préférence d'au plus 30 $m^2$/g, en particulier d'au plus 20 $m^2$/g, par exemple d'au plus 10 $m^2$/g.

La surface spécifique BET est déterminée selon la méthode de BRUNAUER - EMMETT - TELLER décrite dans "The journal of the American Chemical Society", Vol. 60, page 309, février 1938 et correspondant à la norme NFT 45007 (novembre 1987).

Par ailleurs, la silice précipitée S selon l'invention, peut présenter une densité de remplissage à l'état tassé, mesurée selon la norme ISO 787/11, d'au plus 0,3 g/ml, de préférence de 0,04 à 0,3 g/ml, en particulier de 0,05 à 0,3 g/ml, notamment de 0,05 à 0,2 g/ml ; cette densité de remplissage à l'état tassé peut être également comprise entre 0,1 à 0,3 g/ml , notamment entre 0,1 et 0,27 g/ml, en particulier entre 0,15 et 0,25 g/ml.

La perte au feu (PAF) de la silice précipitée S selon l'invention, mesurée selon la norme ISO 3262/11, après traitement à 1000 °C, est généralement telle que la différence PAF - humidité soit inférieure à 3,2 %, de préférence inférieure à 3 %, tout particulièrement inférieure à 2,7 %.

L'humidité est la teneur en eau résiduelle mesurée selon la norme ISO 787/2, après traitement thermique à 105 °C pendant 2 heures.

L'humidité de la silice précipitée S selon l'invention, notamment lorsqu'elle est destinée à être utilisée comme charge dans des matrices silicones, est généralement inférieure à 5 %, de préférence inférieure à 4 %, notamment d'au plus 3,5 %, en particulier d'au plus 3,0 %, de la masse totale de l'échantillon. Elle peut être d'au plus 2,0 %, par exemple d'au plus 1,5 % ou d'au plus 1,0 %, de la masse totale de l'échantillon.

La silice précipitée S selon l'invention peut présenter en outre un taux de transmission d'au moins 70 % à un indice de réfraction dans le glycérol situé entre 1,450 et 1,467.

L'indice de réfraction considéré est celui correspondant à la suspension la plus transparente (transmission maximum) de cette silice dans diverses solutions eau-glycérol, transparence déterminée par la transmission à 589 nm avec un spectrophotomètre. Chaque suspension est obtenue par dispersion de 2 g de silice dans 18 g de solution eau-glycérol, puis désaération sous léger vide avant lecture de la transmission (lecture faite avec, comme produit de référence, la solution eau-glycérol sans silice) sur le spectrophotomètre et l'indice de réfraction sur un réfractomètre.

La silice selon l'invention peut se présenter sous forme de billes, de granulés (ou autres agrégats), ou, de manière préférée, de poudre.

La présente invention a également pour objet spécifique un procédé de préparation d'une silice précipitée, en particulier de la silice précipitée S, caractérisé en ce qu'il comprend les étapes successives suivantes :

- (a) on forme un pied de cuve initial aqueux de température comprise entre 80 et 100 °C, par exemple entre 90 et 100 °C, comprenant un silicate, et par exemple de l'eau, la concentration en silicate dans ledit pied de cuve initial, exprimée en équivalent $SiO_2$, étant inférieure ou égale à 15 g/L,
- (b) on ajoute dans ledit pied de cuve initial, à une température comprise entre 80 et 100 °C, par exemple entre 90 et 100 °C, un agent acidifiant, de manière à amener le pH du milieu réactionnel à une valeur comprise entre 7 et 8, de préférence comprise entre 7,2 et 7,8, avantageusement entre 7,3 et 7,7 (typiquement à une valeur sensiblement égale à 7,5),
- (c) on ajoute, dans le milieu ainsi réalisé, à une température comprise entre 80 et 100 °C, par exemple entre 90 et 100 °C, de préférence de manière simultanée, un silicate et un agent acidifiant, les quantités respectives de silicate et d'agent acidifiant ajoutées au cours du temps étant choisies de façon à ce que, pendant toute la durée de l'addition :

  - le pH du milieu réactionnel reste compris entre 7 et 8, de préférence entre 7,2 et 7,8, avantageusement entre 7,3 et 7,7, et
  - la concentration en silicate dans le milieu, exprimée en équivalent $SiO_2$, soit inférieure ou égale à 35 g/L,

- (d) on ajoute dans le milieu obtenu, à une température comprise entre 80 et 100 °C, par exemple entre 90 et 100 °C, un agent acidifiant de manière à amener le pH du milieu à une valeur comprise entre 3 et 6,5,

  - (e) on filtre la suspension (en particulier aqueuse) de silice obtenue,
  - (f) on sèche, de préférence par atomisation, le gâteau de filtration obtenu à l'issue de la filtration (e),

ledit procédé étant caractérisé en ce que, préalablement à son séchage à l'étape (f), on mélange ou ajoute au gâteau de filtration au moins un acide carboxylique, de préférence soluble dans l'eau, et en ce que le gâteau de filtration ainsi obtenu présente, préalablement à son séchage à l'étape (f), une perte au feu à 1000 °C supérieure à 80 % (en particulier comprise entre 81 et 90 %, par exemple entre 83 et 87 %), de préférence supérieure à 82 %, en particulier d'au moins 83 %, notamment comprise entre 84 et 90 %, voire d'au moins 85 % en poids, par exemple entre 85 et 88 %.

Généralement, ce procédé selon l'invention comprend également l'étape suivante :

- (g) on broie ou micronise la silice obtenue à l'issue de l'étape (f).

De manière très préférée, le gâteau de filtration obtenu à l'issue de la filtration (e) est soumis, préalablement à son séchage à l'étape (f), à une opération de délitage, l'acide carboxylique étant mélangé ou ajouté audit gâteau avant cette opération de délitage ou, de manière avantageuse, au cours de cette opération de délitage.

L'opération de délitage est une opération de fluidification ou liquéfaction, dans laquelle le gâteau de filtration est rendu liquide, ici en présence d'acide carboxylique, la silice précipitée se retrouvant en suspension. Cette opération peut être ainsi réalisée en soumettant le gâteau de filtration à une action chimique par addition d'acide carboxylique, éventuellement couplée à une action mécanique (par exemple par passage dans un broyeur de type colloïdal). La suspension (en particulier aqueuse) obtenue après délitage présente une viscosité relativement faible.

Un acide minéral ou un composé à base d'aluminium (type aluminate d'aluminium) peuvent éventuellement être utilisés, en plus de l'acide carboxylique, lors de l'opération de délitage. Cependant, de manière avantageuse, aucun acide minéral et aucun composé à base d'aluminium (type aluminate de sodium) ne sont employés lors de l'opération de délitage.

L'acide carboxylique est, de préférence, choisi parmi l'acide acétique, l'acide formique, l'acide maléique, l'acide octanoïque, l'acide oxalique, l'acide propionique, l'acide succinique.

Les silicates introduits dans les étapes (a) et (c) du procédé peuvent être choisis parmi toutes les formes courantes de silicates. Avantageusement, les silicates utilisés selon l'invention sont des silicates alcalins, comme par exemple les silicates de sodium ou de potassium.

De façon particulièrement préférée, le silicate de l'étape (a) est un silicate de sodium, de même que celui ajouté lors de l'étape (c). Le silicate de sodium mis en oeuvre est alors généralement caractérisé par un rapport pondéral $SiO_2/Na_2O$ compris entre 2 et 4, avantageusement entre 3 et 3,6, ce rapport pondéral $SiO_2/Na_2O$ étant de préférence compris entre 3,3 et 3,5.

Le pied de cuve formé dans l'étape (a) se présente, le plus souvent, sous la forme d'une solution aqueuse de silicate dont la concentration en silicate, exprimée en équivalent $SiO_2$, est, de façon caractéristique, inférieure ou égale à 15 g/L. Typiquement, la concentration en silicate dans le pied de cuve de l'étape (a), exprimée en équivalent $SiO_2$, est comprise entre 1 et 15 g/L. Cette concentration en silicate dans le pied de cuve de l'étape (a), exprimée en équivalent $SiO_2$ est avantageusement inférieure ou égale à 12 g/L, notamment inférieure ou égale à 11 g/L, par exemple d'au plus 10,5 g/L, voire d'au plus 10 g/L ou d'au plus 9 g/L.

Le pied de cuve de l'étape (a) possède généralement un pH de l'ordre de 9 à 13.

L'étape (b) du procédé de l'invention consiste spécifiquement à faire diminuer cette valeur du pH, par addition d'un agent acidifiant, de façon à amener le pH du milieu dans la plage de 7 à 8 (de préférence entre 7,2 et 7,8, avantageusement de 7,3 à 7,7), où il a été mis en évidence que la réaction de précipitation de la silice s'effectue de façon optimale. Par "agent acidifiant", on entend tout composé acide minéral ou organique susceptible de pouvoir mener à une diminution du pH du pied de cuve. Ainsi, à titre d'agent acidifiant, on peut avantageusement mettre en oeuvre un acide minéral tel que l'acide sulfurique, l'acide chlorhydrique ou l'acide nitrique.

De manière avantageuse, aucun électrolyte n'est ajouté au cours du procédé, en particulier dans l'étape (a). Le terme d'électrolyte s'entend ici dans son acceptation normale, c'est-à-dire qu'il désigne toute substance ionique ou moléculaire qui, lorsqu'elle est en solution, se décompose ou se dissocie pour former des ions ou des particules chargées (les électrolytes usuels sont des sels des métaux alcalins et alcalino-terreux, notamment le sel du métal de silicate de départ et de l'agent acidifiant, comme le chlorure de sodium dans le cas de la réaction d'un silicate de sodium avec l'acide chlorhydrique ou le sulfate de sodium dans le cas de la réaction d'un silicate de sodium avec l'acide sulfurique).

L'agent acidifiant mis en oeuvre dans l'étape (b) du procédé est de préférence l'acide sulfurique, en particulier lorsque le silicate présent dans le pied de cuve initial est un silicate alcalin. De façon générale, l'agent acidifiant de l'étape (b) est le plus souvent introduit sous la forme d'une solution aqueuse, de préférence diluée, généralement de normalité comprise entre 0,25 et 8 N. Ainsi, dans l'étape (b), la diminution du pH du milieu peut avantageusement être réalisée par addition d'une solution aqueuse d'acide sulfurique de concentration comprise entre 10 et 350 g/L, et de préférence entre 50 et 250 g/L.

Quelle que soit la nature exacte de l'agent acidifiant de l'étape (b), cet agent acidifiant doit être mis en oeuvre de façon telle que son addition conduise à une diminution du pH du milieu jusqu'à une valeur comprise entre 7 et 8, de préférence entre 7,2 et 7,8, avantageusement entre 7,3 et 7,7 (typiquement à une valeur sensiblement égale à 7,5). La quantité d'agent acidifiant à mettre en oeuvre dans ce cadre est généralement déterminée en pratique en mesurant l'évolution du pH au cours de l'addition, l'addition de l'agent acidifiant de l'étape (b) étant poursuivie jusqu'à ce que le pH atteigne la valeur recherchée.

Par ailleurs, l'addition de l'étape (b) s'effectue de préférence de façon progressive, c'est-à-dire avantageusement, en règle générale, avec une durée d'addition comprise entre 3 et 70 minutes, notamment entre 5 et 60 minutes, de préférence au moins égale à 10 minutes. Cette durée d'addition peut être inférieure à 30 minutes.

Selon un mode particulier de réalisation envisageable pour l'étape (b), cette étape peut inclure un processus de mûrissement, qui, le cas échéant, est réalisé en laissant le milieu évoluer pendant une durée généralement comprise entre 5 et 30 minutes, par exemple à une température comprise entre 90 et 100 °C, étant entendu que, suite à ce mûrissement, le pH milieu réactionnel est adapté si nécessaire, notamment par ajout d'un agent acidifiant, de sorte qu'à l'issue de l'étape (b) le pH du milieu se situe dans la gamme de pH comprise entre 7 et 8, et avantageusement dans les gammes préférentielles précitées.

Suite à l'étape (b), par laquelle le pH du milieu réactionnel est amené dans la zone de 7 à 8, de préférence de 7,2 à 7,8, avantageusement de 7,3 à 7,7 (et typiquement à une valeur sensiblement égale à 7,5), l'étape (c) du procédé consiste à poursuivre le processus de précipitation de silice, en introduisant du silicate additionnel, et en maintenant spécifiquement le pH du milieu dans la zone comprise entre 7 et 8, de préférence entre 7,2 et 7,8, avantageusement entre 7,3 et 7,7, de préférence à une valeur sensiblement constante, cette valeur constante étant alors sensiblement égale à 7,5.

De préférence, l'étape (c) du procédé de l'invention est conduite immédiatement après obtention pour le milieu du pH recherché dans l'étape (b).

L'addition du silicate et de l'agent acidifiant qui est réalisée lors de l'étape (c) peut consister en une addition continue de silicate dans le milieu au cours de laquelle on mesure le pH du milieu, et pendant laquelle on régule la valeur de ce pH par introduction de l'agent acidifiant, cette introduction de l'agent acidifiant pouvant par exemple être réalisée dès que le pH du milieu devient supérieur à une valeur de contrôle comprise entre 7 et 8, cette valeur de contrôle étant généralement fixée aux alentours de 7,5. Par ce moyen, on arrive à maintenir dans le milieu une valeur sensiblement constante du pH, c'est-à-dire variant avantageusement à +/- 0,2 unité de pH (de préférence à +/- 0,1 unité de pH) autour d'une valeur fixe, généralement comprise entre 7,3 et 7,7.

Alternativement, l'addition réalisée lors de l'étape (c) peut également consister en une addition continue d'agent acidifiant dans le milieu, le pH étant alors régulé au cours de l'addition par introduction du silicate cette introduction du silicate pouvant là encore être par exemple réalisée dès que le pH du milieu devient inférieur à une valeur de contrôle comprise entre 7 et 8, fixée le plus souvent aux alentours de 7,5. Par ce moyen, on arrive également à maintenir le milieu à un pH sensiblement constant, c'est-à-dire variant avantageusement à +/-0,2 unité de pH (de préférence à +/-0,1 unité de pH) autour d'une valeur fixe, généralement comprise entre 7,3 et 7,7.

Selon encore un autre mode de mise en oeuvre envisageable (mode préféré) l'addition réalisée lors de l'étape (c) peut consister en une addition simultanée continue à la fois d'agent acidifiant et de silicate, avec des concentrations et des débits calculés de façon à ce que, durant toute la durée de l'addition, le pH du milieu reste compris entre 7 et 8, et de préférence entre 7,2 et 7,8. Dans ce cas, le pH du milieu a généralement tendance à évoluer au cours de l'étape (c), tout en restant dans la gamme précitée, mais il peut, dans certains cas, demeurer sensiblement égal à une valeur constante, avantageusement de l'ordre de 7,5. Dans ce cadre, on préfère généralement que, tout au long de l'étape (c), les débits instantanés correspondant à la quantité de fonctions silicates (exprimées en équivalent molaire de NaOH) introduites par seconde (notée $d_S$), et la quantité de fonctions acides (en moles) introduites par seconde (notée $d_A$), soient tels que le rapport $d_S/d_A$ reste en permanence compris entre 1,01 et 1,09, et de préférence entre 1,02 et 1,07.

Quel que soit le mode exact de mise en oeuvre de l'étape (c), le silicate et l'agent acidifiant utilisés sont le plus souvent identiques à ceux mis en oeuvre dans les étapes (a) et (b). Ainsi, le silicate de l'étape (c) est de préférence un silicate alcalin, avantageusement un silicate de sodium, et l'agent acidifiant est préférentiellement un acide minéral fort, le plus souvent l'acide sulfurique.

Dans la mesure où, lors de l'addition réalisée dans l'étape (c), la concentration en silicate dans le milieu (exprimée en équivalent $SiO_2$) doit, de façon caractéristique, être maintenue inférieure ou égale à 35 g/L, le silicate introduit dans le milieu réactionnel lors de l'étape (c) est généralement sous la forme d'une solution aqueuse diluée, c'est à dire de concentration, exprimée en équivalent $SiO_2$, avantageusement comprise entre 10 et 360 g/L, de préférence inférieure à 300 g/L et avantageusement inférieure à 270 g/L, et ce tout particulièrement lorsqu'on utilise des silicates alcalins tels que les silicates de sodium. De la même façon, l'agent acidifiant est le plus souvent sous la forme d'une solution aqueuse diluée, qui possède généralement une normalité comprise entre 0,25 et 8 N, et de préférence entre 0,5 et 4 N. Ainsi, dans le cas spécifique de l'utilisation d'une solution aqueuse d'acide sulfurique à titre d'agent acidifiant de l'étape (c), par exemple, la concentration de la solution est avantageusement comprise entre 25 et 380 g/L, et de préférence entre 50 et 300 g/L.

Compte tenu de la mise en oeuvre de concentrations diluées dans le milieu de précipitation des silices, les concentrations en sels dans ce milieu, notamment liées à la réaction du silicate et de l'agent acidifiant, sont faibles, ce qui se traduit par une faible force ionique au sein du milieu de précipitation mis en oeuvre.

De manière à améliorer encore le contrôle de la formation de la silice, il peut être particulièrement avantageux de réaliser l'addition de l'étape (c) avec des débits de silicate et d'agent acidifiant relativement faibles, c'est-à-dire, le plus souvent, avec une durée d'addition de l'étape (c) de préférence comprise entre 15 et 300 minutes, et de préférence entre 30 et 100 minutes. De telles durées d'addition mènent en effet généralement à l'obtention de particules de silices présentant des taux de groupements Si-OH en surface réduits.

De façon générale, l'étape (c) du procédé de l'invention est conduite sous agitation à une température comprise entre 80 et 100 °C, et généralement à la même température que l'addition réalisée lors de l'étape (b). Ainsi, la température de mise en oeuvre de l'étape (c) peut avantageusement être comprise entre 90 et 100 °C, et elle est de préférence de l'ordre de 95 °C.

Selon une variante particulière (non préférée) du procédé selon l'invention, et ce notamment pour la préparation de silices pouvant être utilisées dans des applications autres qu'alimentaires, dentifrices, cosmétiques ou pharmaceutiques, on peut éventuellement introduire dans le milieu réactionnel, au cours de l'étape (c), par exemple à la fin de cette étape (c'est à dire typiquement durant la période correspondant au dernier quart de cette étape, généralement au cours des 5 à 15 dernières minutes de cette étape) un sel d'aluminium de nature acide comme un sulfate d'aluminium. La quantité de composé d'aluminium introduite dans ce cadre est généralement telle qu'au sein du milieu réactionnel le rapport $Al/SiO_2$ est compris entre 0,1 et 1 % en masse, ce rapport étant en particulier au plus égal à 0,6 %, par exemple inférieur ou égal à 0,5 %.

Quel que soit le mode exact de réalisation de l'étape (c), à l'issue de cette étape, le milieu réactionnel est spécifiquement à un pH compris entre 7 et 8, de préférence entre 7,2 et 7,8, avantageusement entre 7,3 et 7,7 (typiquement sensiblement égal à 7,5).

En fonction des applications envisagées pour la silice, l'étape (d) d'acidification du milieu dans la zone de pH de 3 à 6,5 peut être modulée par la quantité d'agent acidifiant additionné. De préférence, le pH du milieu atteint à l'issue de l'étape (d) est compris entre 3,1 et 5,5.

L'agent acidifiant de l'étape (d) peut être identique ou différent de celui ou ceux mis en oeuvre dans les étapes (b) et (c). De préférence, cet agent acidifiant de l'étape (d) est introduit dans le milieu sous la forme d'une solution aqueuse de normalité comprise entre 0,25 et 8 N. Avantageusement, il s'agit d'une solution aqueuse d'acide sulfurique, généralement à une concentration comprise entre 25 et 380 g/L le cas échéant.

Les étapes (a), (b), (c) et/ou (d) du procédé selon l'invention peuvent être conduites à une température comprise entre 90 et 100 °C, en particulier à une température comprise entre 93 et 97 °C, par exemple à une température sensiblement égale à 95 °C tout au long du procédé.

Les étapes (a), (b), (c) et/ou (d) du procédé selon l'invention sont en général effectuées sous agitation.

Selon une variante avantageuse du procédé de l'invention, les ou l'une des suspensions ou dispersions (en particulier aqueuses) de silice obtenues à l'issue des étapes (c) et (d) peuvent être soumises à une étape de mûrissement, généralement conduite, le cas échéant, en laissant le milieu, de préférence sous agitation, à une température comprise entre 90 et 100 °C, pendant une durée qui peut être avantageusement comprise entre 2 et 240 minutes, par exemple pendant une durée supérieure à 30 minutes, la température lors du mûrissement étant préférentiellement sensiblement constante (le cas échéant, avantageusement sensiblement égale à 95 °C), ou bien croissante (généralement par pallier(s) le cas échéant) dans la gamme de température allant de 90 à 100 °C.

L'addition d'un sel d'aluminium de nature acide comme un sulfate d'aluminium, qui est envisageable dans l'étape (c) peut également être conduite au cours de l'étape (d), ou bien encore au cours de l'éventuelle étape de mûrissement ultérieure. Ainsi, de façon générale, cette addition d'un sel d'aluminium de nature acide comme un sulfate d'aluminium dans le milieu peut avoir lieu entre l'étape (c) et l'étape (e), même si cela ne constitue pas un mode de réalisation préférée.

Le plus souvent, lors de cette étape (e), la suspension obtenue à l'issue de l'étape (d), et de l'éventuelle étape de mûrissement suivante, est soumise à une filtration sur filtre presse ou à une filtration sous vide en utilisant un filtre rotatif, un filtre à bande, ou encore un filtre plan, cette filtration conduisant à l'obtention d'un gâteau de filtration de silice.

Le gâteau de filtration est, éventuellement après lavage, généralement par de l'eau, soumis à l'étape (f) à un séchage, de préférence par une atomisation adaptée, par exemple à l'aide d'un atomiseur à buse (notamment à pression liquide ou bifluide) ou, de préférence, à turbines.

Préalablement à son séchage à l'étape (f), on mélange au gâteau de filtration au moins un acide carboxylique, de préférence soluble dans l'eau, et le gâteau de filtration ainsi obtenu présente, préalablement à son séchage à l'étape (f), une perte au feu à 1000 °C supérieure à 80 % (en particulier comprise entre 81 et 90 %, par exemple entre 83 et 87 %), de préférence supérieure à 82 %, en particulier d'au moins 83 %, notamment comprise entre 84 et 90 %, voire d'au moins 85 % en poids, par exemple entre 85 et 88 %.

Les silices séchées obtenues à l'issue de l'étape (f) peuvent éventuellement être soumises à une étape d'agglomération, notamment par compression directe, par une granulation en voie humide (c'est-à-dire avec utilisation d'un liant tel que l'eau), par extrusion et, de préférence, par compactage à sec. Lorsque l'on met en oeuvre cette dernière technique, il peut s'avérer avantageux, avant de procéder au compactage, de désaérer (opération aussi appelée prédensification ou dégazage) les produits pulvérulents de manière à éliminer l'air inclus dans ceux-ci et assurer un compactage plus régulier. A l'issue de l'étape d'agglomération, les produits peuvent être calibrés à une taille désirée, par exemple par tamisage. La silice précipitée compactée susceptible d'être obtenue se présente alors plutôt sous la forme de granulés. Le cas échéant, ces granulés peuvent se présenter sous des formes les plus diverses. A titre d'exemple, on peut notamment citer les formes sphérique, cylindrique, parallélépipédique, de pastille, de plaquette, de boulette, d'extrudé à section circulaire ou polylobée. Les dimensions moyennes de ces granulés sont par exemple comprises entre 2 et 20 mm.

En général, la silice précipitée obtenue à l'issue de l'étape (f), puis éventuellement agglomérée, est ensuite micronisée ou, de préférence, broyée.

La micronisation peut être effectuée avec un microniseur, comme un broyeur à jet d'air.

Le broyage peut être mis en oeuvre en particulier à l'aide d'un broyeur mécanique, par exemple du type ACM, Forplex, notamment un broyeur sélecteur à marteaux.

Les silices précipitées selon la présente invention, notamment les silices précipitées S, ou (susceptibles d'être) obtenues par le procédé selon l'invention précédemment décrit présentent une très bonne aptitude à la dispersion, notamment au sein de matrices ou milieux solides, type matrices à base de silicone(s), matrices à base d'élastomère(s) notamment clair(s) ou semi-clair(s), matrices à base de polyamide(s), ou pâteux divers. Ceci se traduit par un bon pouvoir renforçant et/ou épaississant. Elles présentent en général une faible affinité vis-à-vis de l'eau.

Elles sont adaptées pour une utilisation à titre de charge, en particulier renforçante, dans des matrices à base de silicone(s), notamment des matrices élastomères silicones vulcanisables à chaud ou à froid, auxquelles elles confèrent de bonnes propriétés optiques, tout en leur procurant, de préférence, des propriétés mécaniques et/ou rhéologiques très satisfaisantes.

Elles trouvent en effet une application avantageuse dans le renforcement de compositions (matrices) organosiliciques élastomères ou pâteuses vulcanisables à chaud (silicones HTV par exemple) ou à froid, destinées notamment à une fonction d'isolation, comme l'enrobage de câbles électriques. Lesdites matrices à base de silicone, en particulier celles destinées à une fonction d'isolation, peuvent être mises en forme par extrusion, avant d'être réticulées. La faible valeur de reprise en eau des silices de l'invention permet d'éviter ou de limiter la formation de bulles notamment lors de l'extrusion. Ces matrices à base de silicone peuvent être également mises en forme par moulage. Les silices selon l'invention confèrent avantageusement aux matrices silicones de très bonnes propriétés électriques et mécaniques, notamment au niveau de la résistance à la déchirure, de la résistance à la rupture, voire même de la déformation rémanente à la compression, et également d'excellentes propriétés optiques (en particulier au niveau de la blancheur et de la transparence).

La nature du ou des organopolysiloxanes vulcanisables présents dans ce type de composition, ainsi que celle des agents de vulcanisation et autres additifs éventuellement présents, de même que les conditions de vulcanisation sont bien connues de l'homme de métier ; celles-ci sont notamment décrites dans la demande WO 03/055801.

La quantité de silice précipitée pouvant être mise en oeuvre pour le renforcement desdites matrices à base de silicones peut aller de 3 à 20 % lorsqu'il s'agit de pâtes silicones, ou de 5 à 50 %, de préférence de 10 à 40 % lorsqu'il s'agit d'une composition de nature élastomère.

Les silices précipitées selon la présente invention, notamment les silices précipitées S, ou (susceptibles d'être) obtenues par le procédé selon l'invention précédemment décrit peuvent être également employées à titre de charge renforçante dans une matrice à base d'élastomère(s), en particulier clair(s) ou semi-clair(s), pour semelles de chaussures. Elles peuvent permettre un renforcement élevé des matrices transparentes ou translucides utilisées pour la confection de pièces en caoutchouc transparentes ou translucides constitutives de semelles de chaussures. Elles peuvent permettent l'obtention de matrices renforcées ayant une très bonne transparence. La quantité de silice précipitée pouvant être utilisée dans ce type de matrice est généralement comprise entre 10 et 50 %, notamment entre 20 et 40 %, par rapport au poids d'élastomère(s).

Les silices précipitées selon la présente invention, notamment les silices précipitées S, ou (susceptibles d'être) obtenues par le procédé selon l'invention précédemment décrit peuvent être également employées par exemple à titre de charge renforçante dans des matrices à base de polyamide(s), à titre de charge dans des compositions de ciment ou béton.

Une application possible des silices précipitées selon la présente invention, notamment les silices précipitées S, ou (susceptibles d'être) obtenues par le procédé selon l'invention précédemment décrit réside dans leur utilisation comme support de liquide, notamment du fait de leur bonne capacité d'absorption et d'une coulabilité très satisfaisante.

On peut citer comme liquides, les liquides organiques tels que les acides organiques, les agents tensioactifs, par exemple de type anionique ou non-ionique, les additifs organiques pour caoutchouc / polymères, les pesticides.

A titre de liquides, on utilise de préférence ici surtout des additifs liquides tels que des arômes, des colorants, des compléments liquides d'alimentation (notamment d'alimentation animale (par exemple la vitamine E, l'acétate de vitamine E, le chlorhydrate de choline)) ou des agents conservateurs, de préférence des acides carboxyliques (acide propionique par exemple).

Les compositions conditionnées comprenant au moins un liquide absorbé sur un support formé par une telle silice, présentent préférentiellement une teneur en liquide d'au moins 50 % en poids, en particulier comprise entre 50 et 75 % en poids, par exemple entre 50 et 65 % en poids.

On peut également mentionner l'utilisation, par exemple en quantité de l'ordre de 60 % en poids, de la silice de l'invention, à titre de support de solvant et/ou d'huile, dans des compositions à base de polymères destinées à la préparation de membranes poreuses séparatrices de batteries (« battery separator ») ; le solvant et/ou l'huile supportés, une fois extraits après extrusion/calandrage, donnent naissance à un réseau de pores.

Les silices précipitées selon la présente invention, notamment les silices précipitées S, ou (susceptibles d'être)

obtenues par le procédé selon l'invention précédemment décrit peuvent être incorporée comme charge au sein de compositions dentifrices, lors de la préparation desdites compositions, qui peuvent se présenter sous forme de pâte ou de gel, et peuvent permettre ainsi d'épaissir ces compositions ou de leur apporter de la texture.

Selon l'invention, la silice peut être utilisée comme agent épaississant ou texturant à raison de 0,1 à 20 %, de préférence de 0,5 à 15 %, tout particulièrement de 1 à 10 %, en poids de la composition dentifrice.

Ladite composition dentifrice peut comprendre en outre d'autres ingrédients habituels, en particulier des agents abrasifs minéraux, insolubles dans l'eau, éventuellement d'autres agents épaississants, des humectants, des colorants, des antibactériens, des dérivés fluorés, des arômes, des édulcorants, des agants antitartre, antiplaque, des agents de blanchiment...

L'exemple suivant illustre l'invention sans toutefois en limiter la portée.

EXEMPLE

Dans un réacteur équipé d'un système de régulation de température et de pH et d'un système d'agitation avec hélice 3 pâles, on a introduit 14000 g d'eau, et 630 g d'une solution aqueuse de silicate de sodium à 236 g/L en équivalent $SiO_2$, le rapport pondéral (Rp) $SiO_2/Na_2O$ du silicate de sodium utilisé étant de 3,46.

Après la mise en marche de l'agitation (250 tours par minute) le pied de cuve ainsi constitué a été chauffé à 95 °C et le pH a été amené à 7,5, en 11 minutes, par ajout d'une solution aqueuse d'acide sulfurique à 80 g/L (débit moyen de 61 g par minute).

Une fois le pH de 7,5 atteint, on a procédé à une addition simultanée de 4320 g d'une solution aqueuse de silicate de sodium (Rp = 3,46) à 236 g/L en équivalent $SiO_2$, à un débit de 48 g/min (durée de l'addition : 90 minutes), et de 4770 g d'une solution aqueuse d'acide sulfurique à 80 g/L, à un débit de 53 g/min, de manière à maintenir le pH du milieu à une valeur égale à 7,5 (à 0,1 unité de pH près).

Après les 90 minutes d'addition, on a arrêté l'addition de silicate et on a poursuivi une addition d'acide jusqu'à stabilisation du pH du mélange réactionnel à 3,4. On a effectué un mûrissement en laissant la solution sous agitation pendant 5 minutes.

La bouillie obtenue a ensuite été filtrée sur filtre plan, puis le gâteau de filtration obtenu a été délité avec de l'eau et avec un ajout d'acide maléïque.

Le gâteau délité obtenu présente une perte au feu à 1000 °C supérieure à 83 %. Il a été ensuite séché par atomisation à turbine.

Puis la silice séchée a été broyée à l'aide d'un broyeur sélecteur.

Les caractéristiques physico-chimiques de la silice précipitée obtenue, sous forme de poudre, sont les suivantes :

- reprise en eau : 5,5 %
- teneur en $Na_2SO_4$ : 0,20 % (par rapport à la masse totale du matériau à l'état sec)
- teneur en acide maléïque + maléate correspondant, exprimée en carbone : 0,04 %
- surface spécifique CTAB : 160 $m^2$/g
- surface spécifique BET : 160 $m^2$/g
- prise d'huile DOP : 320 ml/100g
- taille moyenne de particules : 12 $\mu$m
- pH : 5,5
- perte au feu à 1000 °C : 4,9 %
- teneur résiduelle en eau après 2 heures à 105 °C : 2,6 %

**Revendications**

1. Utilisation d'acide carboxylique lors de la préparation de silice précipitée ou de suspension de silice précipitée, dans laquelle l'acide carboxylique est mélangé ou ajouté au gâteau de filtration issu de la réaction de precipitation de la silice au cours de l'opération de délitage à laquelle est soumis le gâteau de filtration, le mélange obtenu étant ensuite éventuellement séché.

2. Utilisation selon la revendication 1, dans laquelle ledit acide carboxylique est choisi parmi l'acide maléique, l'acide formique, l'acide octanoïque, l'acide acétique, l'acide oxalique, l'acide propionique, l'acide succinique.

3. Silice précipitée **caractérisée en ce qu'**elle présente une teneur en acide carboxylique + carboxylate correspondant, exprimée en carbone, d'au moins 0,02 %, de préférence d'au moins 0,03 %, en particulier d'au moins 0,04 %, notamment d'au moins 0,05 %, par exemple d'au moins 0,10 %, en poids.

4. Silice précipitée selon la revendication 3, **caractérisée en ce qu'**elle présente à sa surface des molécules dudit acide carboxylique et/ou des molécules du carboxylate correspondant audit acide carboxylique.

5. Silice précipitée selon la revendication 3 ou 4 **caractérisée en ce qu'**elle possède:

   - une reprise en eau inférieure à 6 %, et
   - un taux d'anion résiduel, exprimé en sulfate de métal alcalin, inférieur à 1 % en poids.

6. Silice précipitée selon la revendication 5, **caractérisée en ce qu'**elle possède une reprise en eau supérieure à 3 %, en particulier comprise entre 4,5 et 5,8 %.

7. Silice précipitée selon l'une des revendications 3 à 6, **caractérisée en ce que** ledit acide carboxylique est l'acide maléique, l'acide formique, l'acide octanoïque, l'acide acétique, l'acide oxalique, l'acide propionique ou l'acide succinique.

8. Silice précipitée selon l'une des revendications 3 à 7, **caractérisée en ce que** ledit acide carboxylique est l'acide maléique, l'acide formique, l'acide octanoïque, l'acide propionique ou l'acide succinique.

9. Silice précipitée selon l'une des revendications 5 à 8, **caractérisée** en ce 2 qu'elle possède une surface spécifique CTAB comprise entre 50 et 260 m /g, de 2 2 manière préférée entre 110 et 240 m /g, en particulier entre 130 et 220 m /g, 2 2 notamment entre 145 et 210 $m^2$/g, par exemple entre 150 et 200 m /g.

10. Silice précipitée selon l'une des revendications 5 à 9, **caractérisée en ce qu'**elle possède une prise d'huile DOP supérieure à 300 ml/100g, de préférence supérieure à 310 ml/100g, en particulier comprise entre 315 et 450 ml/100g, notamment entre 315 et 400 ml/100g, par exemple entre 320 et 380 ml/100g.

11. Silice précipitée selon l'une des revendications 5 à 10, **caractérisée en ce qu'**elle possède un pH compris entre 3,5 et 7,5, de préférence entre 4 et 7, en particulier entre 4,5 et 6.

12. Silice précipitée selon l'une des revendications 5 à 11, **caractérisée en ce qu'**elle présente une surface spécifique BET et une surface CTAB telles que la 2 différence surface BET -surface CTAB soit d'au plus 60 $m^2$/g, de préférence d'au plus 30 $m^2$/g, en particulier d'au plus 20 $m^2$/g, par exemple d'au plus 10 $m^2$/g.

13. Suspension de silice précipitée comprenant la silice précipitée selon l'une des revendications 3 et 4.

14. Procédé de préparation d'une silice précipitée ou d'une suspension de silice précipitée, dans lequel :

   - on fait réagir au moins un silicate avec au moins un agent acidifiant, de manière à obtenir une suspension de silice précipitée,
   - on filtre ladite suspension de silice précipitée, de manière a obtenir un gâteau de filtration,
   - on soumet ledit gâteau de filtration à une opération de délitage, **caractérisé en ce qu'**on mélange ou ajoute au gâteau de filtration au cours de l'opération de délitage au moins un acide carboxylique, le mélange obtenu étant ensuite éventuellement séché.

15. Procédé de préparation d'une silice précipitée selon l'une des revendications 6 à 13, **caractérisé en ce qu'**il comprend les étapes suivantes:

   • (a) on forme un pied de cuve initial aqueux de température comprise entre 80 et 100°C, comprenant un silicate, la concentration en silicate dans ledit pied de cuve initial, exprimée en équivalent $SiO_2$, étant inférieure ou égalé à 15 g/L,
   • (b) on ajoute dans ledit pied de cuve initial, à une température comprise entre 80 et 100°C, un agent acidifiant, de manière à amener le pH du milieu réactionnel à une valeur comprise entre 7 et 8, de préférence comprise entre 7,2 et 7,8,
   • (c) on ajoute, dans le milieu ainsi réalisé, à une température comprise entre 80 et 100°C, de préférence de manière simultanée, un silicate et un agent acidifiant, les quantités respectives de silicate et d'agent acidifiant ajoutées au cours du temps étant choisies de façon à ce que, pendant toute la durée de l'addition:

- le pH du milieu réactionnel reste compris entre 7 et 8, de préférence entre 7,2 et 7,8, et

- la concentration en silicate dans le milieu, exprimée en equivalent $SiO_2$, soit inférieure ou égale à 35 g/L,

• (d) on ajoute dans le milieu obtenu, à une température comprise entre 80 et 100°C, un agent acidifiant de manière à amener le pH du milieu à une valeur comprise entre 3 et 6,5,

• (e) on filtre la suspension de silice obtenue,

• (f) on sèche le gâteau de filtration obtenu à l'issue de la filtration (e), ledit procédé étant **caractérisé en ce que**, prealablement à son sechage à l'étape (f), on mélange ou ajoute au gâteau de filtration au moins un acide carboxylique, et **en ce que** le gâteau de filtration ainsi obtenu présente, préalablement à son séchage à l'etape (f), une perte au feu à 1000°C superieure à 80 %, de préférence supérieure à 82 %, en particulier d'au moins 83 %.

16. Procédé selon la revendication 15, **caractérisé en ce que** le gâteau de filtration obtenu à l'issue de la filtration (e) est soumis, préalablement à son séchage à l'étape (f), à une operation de délitage, l'acide carboxylique étant ajouté audit gâteau au cours de ladite opération de délitage.

17. Procédé selon l'une des revendications 14 à 16, **caractérisé en ce que** ledit acide carboxylique est choisi parmi l'acide maléique, l'acide formique, l'acide octanoïque, l'acide acétique, l'acide oxalique, l'acide propionique, l'acide succinique.

18. Application d'une silice précipitée selon l'une des revendications 3 à 12 ou obtenue par le procédé selon l'une des revendications 15 à 17, à titre de charge renforçante dans une matrice à base de silicone(s) ou dans une matrice à base d'élastomère(s), en particulier clair(s) ou semi-clair(s), pour semelles de chaussures, dans une matrice à base de polyamide(s), à titre de charge dans une composition de ciment ou béton, à titre de support de liquide, à titre de charge dans une composition de dentifrice ou pour la préparation de séparateurs de batterie.

**Patentansprüche**

1. Verwendung von Carbonsäure bei der Herstellung von Fällungskieselsäure oder einer Fällungskieselsäure-Suspension, wobei die Carbonsäure dem Filterkuchen beigemischt oder zugesetzt wird, der aus der Reaktion der Fällung von Kieselsäure während des Fragmentierungsvorgangs hervorgegangen ist, dem der Filterkuchen unterzogen wurde, wobei die gewonnene Mischung anschließend eventuell getrocknet wird.

2. Verwendung nach Anspruch 1, wobei die Carbonsäure aus Maleinsäure, Ameisensäure, Octansäure, Essigsäure, Oxalsäure, Propionsäure, Bernsteinsäure ausgewählt ist.

3. Fällungskieselsäure, **dadurch gekennzeichnet, dass** sie einen Gehalt an Carbonsäure + entsprechendem Carboxylat, ausgedrückt in Kohlenstoff, von wenigstens 0,02 Gew.-%, vorzugsweise wenigstens 0,03 Gew.-%, insbesondere wenigstens 0,04 Gew.-%, im Speziellen wenigstens 0,05 Gew.-%, zum Beispiel wenigstens 0,10 Gew.-% umfasst.

4. Fällungskieselsäure nach Anspruch 3, **dadurch gekennzeichnet, dass** sie an ihrer Oberfläche Moleküle der Carbonsäure und/oder Moleküle des der Carbonsäure entsprechenden Carboxylats aufweist.

5. Fällungskieselsäure nach Anspruch 3 oder 4, **dadurch gekennzeichnet, dass** sie aufweist:

- eine Wasseraufnahme von unter 6 %, und
- einen Restanionengehalt, ausgedrückt in Alkalimetallsulfat, von unter 1 Gew.-%.

6. Fällungskieselsäure nach Anspruch 5, **dadurch gekennzeichnet, dass** sie eine Wasseraufnahme von über 3 %, insbesondere zwischen 4,5 und 5,8 %, aufweist.

7. Fällungskieselsäure nach einem der Ansprüche 3 bis 6, **dadurch gekennzeichnet, dass** die Carbonsäure Maleinsäure, Ameisensäure, Octansäure, Essigsäure, Oxalsäure, Propionsäure oder Bernsteinsäure ist.

8. Fällungskieselsäure nach einem der Ansprüche 3 bis 7, **dadurch gekennzeichnet, dass** die Carbonsäure Maleinsäure, Ameisensäure, Octansäure, Propionsäure oder Bernsteinsäure ist.

9. Fällungskieselsäure nach einem der Ansprüche 5 bis 8, **dadurch gekennzeichnet, dass** sie eine spezifische CTAB-Oberfläche zwischen 50 und 260 m$^2$/g, vorzugsweise zwischen 110 und 240 m$^2$/g, insbesondere zwischen 130 und 220 m$^2$/g, im Speziellen zwischen 145 und 210 m$^2$/g, zum Beispiel zwischen 150 und 200 m$^2$/g aufweist.

10. Fällungskieselsäure nach einem der Ansprüche 5 bis 9, **dadurch gekennzeichnet, dass** sie eine Ölaufnahme DOP von über 300 ml/100 g, vorzugsweise von über 310 ml/100 g, insbesondere zwischen 315 und 450 ml/100 g, im Speziellen zwischen 315 und 400 ml/100 g, zum Beispiel zwischen 320 und 380 ml/100 g aufweist.

11. Fällungskieselsäure nach einem der Ansprüche 5 bis 10, **dadurch gekennzeichnet, dass** sie einen pH zwischen 3,5 und 7,5, vorzugsweise zwischen 4 und 7, insbesondere zwischen 4,5 und 6 aufweist.

12. Fällungskieselsäure nach einem der Ansprüche 5 bis 11, **dadurch gekennzeichnet, dass** sie eine derartige spezifische BET-Oberfläche und eine derartige CTAB-Oberfläche aufweist, dass die Differenz zwischen BET-Oberfläche und CTAB-Oberfläche höchstens 60 m$^2$/g, vorzugsweise höchstens 30 m$^2$/g, insbesondere höchstens 20 m$^2$/g, zum Beispiel höchstens 10 m$^2$/g beträgt.

13. Fällungskieselsäure-Suspension, umfassend die Fällungskieselsäure nach einem der Ansprüche 3 und 4.

14. Verfahren zur Herstellung einer Fällungskieselsäure oder einer Fällungskieselsäure-Suspension, bei dem:

   - wenigstens ein Silicat mit wenigstens einem Säuerungsmittel zur Reaktion gebracht wird, so dass eine Fällungskieselsäure-Suspension gewonnen wird,
   - die Fällungskieselsäure-Suspension filtriert wird, so dass ein Filterkuchen gewonnen wird,
   - der Filterkuchen einem Fragmentierungsvorgang unterzogen wird, **dadurch gekennzeichnet, dass** dem Filterkuchen während des Fragmentierungsvorgangs wenigstens eine Carbonsäure beigemischt oder zugesetzt wird, wobei die gewonnene Mischung anschließend eventuell getrocknet wird.

15. Verfahren zur Herstellung einer Fällungskieselsäure nach einem der Ansprüche 6 bis 13, **dadurch gekennzeichnet, dass** es die folgenden Schritte umfasst:

   • (a) es wird ein wässriger Ansatz mit einer Temperatur zwischen 80 und 100 °C gebildet, der ein Silicat umfasst, wobei die Silicatkonzentration in dem Ansatz, ausgedrückt in SiO$_2$-Äquivalenten, kleiner oder gleich 15 g/L ist,
   • (b) dem Ansatz wird bei einer Temperatur zwischen 80 und 100 °C ein Säuerungsmittel zugesetzt, so dass der pH des Reaktionsmediums auf einen Wert zwischen 7 und 8, vorzugsweise zwischen 7,2 und 7,8, gebracht wird,
   • (c) dem auf diese Weise gebildeten Medium werden bei einer Temperatur zwischen 80 und 100 °C, vorzugsweise gleichzeitig, ein Silicat und ein Säuerungsmittel zugesetzt, wobei die jeweiligen Mengen des Silicats und des Säuerungsmittels, die im Lauf der Zeit zugesetzt werden, derart gewählt werden, dass während der gesamten Zeit des Zusetzens:

      - der pH des Reaktionsmediums zwischen 7 und 8, vorzugsweise zwischen 7,2 und 7,8, bleibt und
      - die Silicatkonzentration in dem Medium, ausgedrückt in SiO$_2$-Äquivalenten, kleiner oder gleich 35 g/L ist,

   • (d) dem auf diese Weise gebildeten Medium wird bei einer Temperatur zwischen 80 und 100 °C ein Säuerungsmittel zugesetzt, so dass der pH des Mediums auf einen Wert zwischen 3 und 6,5 gebracht wird,
   • (e) die gewonnene Kieselsäuresuspension wird filtriert,
   • (f) der nach dem Ende der Filtration (e) gewonnene Filterkuchen wird getrocknet,

   wobei das Verfahren **dadurch gekennzeichnet ist, dass** vor seiner Trocknung im Schritt (f) dem Filterkuchen wenigstens eine Carbonsäure beigemischt oder zugesetzt wird, und dass der auf diese Weise gewonnene Filterkuchen vor seiner Trocknung im Schritt (f) einen Glühverlust bei 1000 °C von über 80 %, vorzugsweise von über 82%, insbesondere wenigstens 83 % aufweist.

16. Verfahren nach Anspruch 15, **dadurch gekennzeichnet, dass** der am Ende der Filtration (e) gewonnene Filterkuchen vor seiner Trocknung im Schritt (f) einem Fragmentierungsvorgang unterzogen wird, wobei dem Kuchen während des Fragmentierungsvorgangs Carbonsäure zugesetzt wird.

17. Verfahren nach einem der Ansprüche 14 bis 16, **dadurch gekennzeichnet, dass** die Carbonsäure aus Maleinsäure, Ameisensäure, Octansäure, Essigsäure, Oxalsäure, Propionsäure, Bernsteinsäure ausgewählt wird.

18. Anwendung einer Fällungskieselsäure nach einem der Ansprüche 3 bis 12, oder einer Fällungskieselsäure, die durch das Verfahren nach einem der Ansprüche 15 bis 17 gewonnen wurde, als verstärkender Füllstoff in einer Matrix auf Basis von Silikon(en) oder in einer Matrix auf Basis von Elastomer(en), wobei diese(s) transparent oder halbtransparent ist (sind), für Schuhsohlen, in einer Matrix auf Basis von Polyamid(en), als Füllstoff in einer Zement- oder Betonzusammensetzung, als Flüssigkeitsträger, als Füllstoff in einer Zahnpasta oder zur Herstellung von Batterieseparatoren.

**Claims**

1. Use of carboxylic acid during the preparation of precipitated silica or of a precipitated silica suspension, in which the carboxylic acid is mixed with or added to the filtration cake resulting from the reaction for the precipitation of the silica during the disintegration operation to which the filtration cake is subjected, the mixture obtained subsequently being optionally dried.

2. Use according to Claim 1, in which said carboxylic acid is chosen from maleic acid, formic acid, octanoic acid, acetic acid, oxalic acid, propionic acid or succinic acid.

3. Precipitated silica **characterized in that** it exhibits a content of carboxylic acid + corresponding carboxylate, expressed as carbon, of at least 0.02% by weight, preferably of at least 0.03% by weight, especially of at least 0.04% by weight, in particular of at least 0.05% by weight, for example of at least 0.10% by weight.

4. Precipitated silica according to Claim 3, **characterized in that** it exhibits, at its surface, molecules of said carboxylic acid and/or molecules of the carboxylate corresponding to said carboxylic acid.

5. Precipitated silica according to Claim 3 or 4, **characterized in that** it has:

   - a water uptake of less than 6%, and
   - a level of residual anion, expressed as alkali metal sulfate, of less than 1% by weight.

6. Precipitated silica according to Claim 5, **characterized in that** it has a water uptake of greater than 3%, in particular of between 4.5 and 5.8%.

7. Precipitated silica according to one of Claims 3 to 6, **characterized in that** said carboxylic acid is maleic acid, formic acid, octanoic acid, acetic acid, oxalic acid, propionic acid or succinic acid.

8. Precipitated silica according to one of Claims 3 to 7, **characterized in that** said carboxylic acid is maleic acid, formic acid, octanoic acid, propionic acid or succinic acid.

9. Precipitated silica according to one of Claims 5 to 8, **characterized in that** it has a CTAB specific surface of between 50 and 260 $m^2$/g, preferably between 110 and 240 $m^2$/g, especially between 130 and 220 $m^2$/g, in particular between 145 and 210 $m^2$/g, for example between 150 and 200 $m^2$/g.

10. Precipitated silica according to one of Claims 5 to 9, **characterized in that** it has a DOP oil uptake of greater than 300 ml/100 g, preferably of greater than 310 ml/100 g, especially of between 315 and 450 ml/100 g, in particular between 315 and 400 ml/100 g, for example between 320 and 380 ml/100 g.

11. Precipitated silica according to one of Claims 5 to 10, **characterized in that** it has a pH of between 3.5 and 7.5, preferably between 4 and 7, especially between 4.5 and 6.

12. Precipitated silica according to one of Claims 5 to 11, **characterized in that** it exhibits a BET specific surface and a CTAB specific surface such that the BET specific surface-CTAB specific surface difference is at most 60 $m^2$/g, preferably at most 30 $m^2$/g, especially at most 20 $m^2$/g, for example at most 10 $m^2$/g.

13. Precipitated silica suspension comprising the precipitated silica according to either of Claims 3 and 4.

**14.** Process for the preparation of a precipitated silica or of a precipitated silica suspension, in which:

- at least one silicate is reacted with at least one acidifying agent, so as to obtain a precipitated silica suspension,
- said precipitated silica suspension is filtered, so as to obtain a filtration cake,
- said filtration cake is subjected to a disintegration operation,

**characterized in that** the filtration cake is mixed with or has added to it, during the disintegration operation, at least one carboxylic acid, the mixture obtained subsequently being optionally dried.

**15.** Process for the preparation of a precipitated silica according to one of Claims 6 to 13, **characterized in that** it comprises the following stages:

• (a) a starting aqueous vessel heel with a temperature of between 80 and 100°C is formed which comprises a silicate, the concentration of silicate in said starting vessel heel, expressed as $SiO_2$ equivalent, being less than or equal to 15 g/l,
• (b) an acidifying agent is added to said starting vessel heel, at a temperature of between 80 and 100°C, so as to bring the pH of the reaction medium to a value of between 7 and 8, preferably of between 7.2 and 7.8,
• (c) a silicate and an acidifying agent are added, preferably simultaneously, to the medium thus produced, at a temperature of between 80 and 100°C, the respective amounts of silicate and of acidifying agent added over time being chosen so that, throughout the duration of the addition:

- the pH of the reaction medium remains between 7 and 8, preferably between 7.2 and 7.8, and
- the concentration of silicate in the medium, expressed as $SiO_2$ equivalent, is less than or equal to 35 g/l,

• (d) an acidifying agent is added to the medium obtained, at a temperature of between 80 and 100°C, so as to bring the pH of the medium to a value of between 3 and 6.5,
• (e) the suspension of silica obtained is filtered,
• (f) the filtration cake obtained on conclusion of the filtration (e) is dried,

said process being **characterized in that**, prior to the drying thereof in stage (f), the filtration cake is mixed with or has added to it at least one carboxylic acid, and **in that** the filtration cake thus obtained exhibits, prior to the drying thereof in stage (f), a loss on ignition at 1000°C of greater than 80%, preferably of greater than 82%, especially of at least 83%.

**16.** Process according to Claim 15, **characterized in that** the filtration cake obtained on conclusion of the filtration (e) is subjected, prior to the drying thereof in stage (f), to a disintegration operation, the carboxylic acid being added to said cake during said disintegration operation.

**17.** Process according to one of Claims 14 to 16, **characterized in that** said carboxylic acid is chosen from maleic acid, formic acid, octanoic acid, acetic acid, oxalic acid, propionic acid or succinic acid.

**18.** Application of a precipitated silica according to one of Claims 3 to 12 or obtained by the process according to one of Claims 15 to 17, as reinforcing filler in a matrix based on silicone(s) or in a matrix based on elastomer(s), especially clear or semi-clear elastomer(s), for shoe soles, in a matrix based on polyamide(s), as filler in a cement or concrete composition, as carrier for liquids, as filler in a dentifrice composition or for the preparation of battery separators.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03055801 A
- US 5616316 A
- EP 407262 A

**Littérature non-brevet citée dans la description**

- **AUER ; EMMETT ; TELLER.** *The journal of the American Chemical Society,* Février 1938, vol. 60, 309